# EUROPEAN PATENT APPLICATION

(11) **EP 4 442 744 A1**
(43) Date of publication of application: **09.10.2024**
(21) Application number: 22900728.1
(22) Date of filing: 10.11.2022
(51) Int. Cl.: C08K 3/013, C08K 9/02, C08F 283/01, C08J 3/20, C08J 5/10, C08L 67/00, C08L 67/06

(54) **COMPOSITE CONSTRUCTION MATERIAL COMPRISING A THERMOSETTING RESIN AND SURFACE-TREATED LOADS**

(30) Priority: 01.12.2021 ES 202131115
(71) Applicant: Clades Composites, S.L., 46940 Manises Valencia (ES)
(72) Inventor: NAVARRO GUIJARRO, Juan Francisco, 46940 Manises (Valencia) (ES); HUELAMO JAREÑO, Jose Pedro, 46940 Manises (Valencia) (ES)
(74) Representative: Temiño Ceniceros, Ignacio
(86) International application number: PCT/ES2022/070721
(87) International publication number: WO 2023/099800

(57) **Abstract**

The present invention relates to a composite construction material comprising a thermosetting resin and surface-treated fillers, the composition of which, in % by weight, comprises 8 - 45% thermosetting resin; 50 - 90% filler material comprising at least one filler selected from mineral filler, porous filler and organic filler, and wherein this filler material is treated with 0.01 - 9% coating selected from fatty acids, fatty acid salts or stearin; and may comprise up to 10% of a pigment and up to 5% of a catalyst; and method for obtaining said material for construction uses similar to polymer concrete and for the manufacture of sanitary products.

## Description

### Field of the invention

The present invention relates to a composite construction material that has the particular feature of mainly consisting of a thermosetting resin and a filler material treated with a surface coating, thereby obtaining a lighter composite material than those usually and currently used in construction with features that allow the physical-mechanical and aesthetic requirements of the final products to be manufactured to be met, wherein preferably, the use of this material is for the manufacture of sanitary material such as shower trays, sinks or counter tops, and can be used as polymer concrete in general.

This invention falls within the different types of construction materials or materials for construction and/or architectural use, and specifically it is included within composite materials that comprise a thermosetting resin in their composition.

### State of the art of the invention

As is generally known in this industrial field, various types of materials are known that comprise at least one thermosetting resin in their structure. Currently, the mineral fillers used in polymer materials with a thermosetting matrix give rise to products with a very high weight, with densities between 1,800-2,300 kg/m3, which complicates their handling and increases transportation costs and, consequently, the carbon footprint of the same. Additionally, the high weight limits the size and shape of certain pieces to be manufactured or constructed by complicating the anchoring and handling thereof.

The existence of other lightweight materials is known, obtained from hollow microspheres of glass or expanded synthetic ceramics or minerals that improve the problem of density, but these products obtained significantly increase the cost, which means that, despite the advantages that they can provide, their use is not high, even competitive, compared to standard higher density materials.

That which is disclosed in document DE2726751A1 is known, wherein a type of decorative panel is described that in its core has a layer comprising, among others, a thermosetting resin and expanded vermiculite, but wherein these panels are very light, they do not have a resistive capacity and serve to be inserted into a frame. Furthermore, this document relates to a material with high mineral fillers processed with heat treatment, which leads to a product with a high carbon footprint and high production costs. That which is disclosed in documents CN101798195A and KR20120035628A is also known, wherein different types of materials are described that comprise a thermosetting resin and porous fillers such as perlite in one case and vermiculite in the other case, wherein the use is intended to be an insulating or fire retardant material, without resistive capacity to be used on its own as a material for a construction use, and as in the previous case, wherein the material is processed at high temperatures with a high carbon footprint and high production costs.

Taking into account all the arguments previously stated, it is considered that it is necessary to develop a composite material that, being light, can have sufficient strength characteristics to be used for a construction use, given that the currently known composite materials comprising a thermosetting resin and a porous filler are either very light and have a use limited to decoration and/or insulation, and do not meet the physical and mechanical requirements to be used for a construction use, or they are very heavy, and this makes them uncompetitive with conventional materials.

To this end, the present invention is based, compared to any other type of known material that has this composition, on coating the fillers. These coatings generate a variation in the physical and chemical interaction between filler and resin, different from the way in which these fillers would have without being coated. These new interactions between the components of the possible formulations cause a decrease in the final density of the products, compared to identical formulae without the fillers being treated with these coatings at 100% or with lower %. The decrease in this density is due to the variation in the intermolecular interactions between the coated fillers and the thermosetting resins, which will ultimately cause a drop in the wettability of the fillers treated by the thermosetting resins, creating three-dimensional structures that contain a greater amount of air between the treated filler and the resins per unit of volume. This density drop effect can be increased when coating porous fillers with these treatments since it would not only affect the intermolecular interaction between the surface of the filler and the resin, but also the capillarity of the set. That is, this type of coating reduces the adhesive intermolecular forces between filler and resin, making them lower than the cohesive intermolecular forces of the resin itself and increasing the effect of occluded air not only at the resin-filler surface interface but also inside the porous filler. The technical problem addressed in the present invention is to develop a lightweight composite material, and the solution to this technical problem is based on treating the surface of the filler or filler material, coating it such that the resin does not wet it, encapsulations are generated, and therefore, it is possible to lighten the density and therefore the weight of the product, without affecting its mechanical properties compared to other products known and used in the sector.

Taking into account the background known in the state of the art, the material that is subject matter of the present invention differs from any other known in the state of the art, and allows a lower density to be obtained compared to currently known materials, while also comprising strength values suitable for use in construction. This means that the technical problems described above are resolved, and this material can have a construction use.

### Description of the invention

The first subject matter of the present invention is to define the composition of a new composite material that improves compounds based on thermosetting resins, allowing a material that is both light and strong to be obtained that can be used for construction use.

In this sense, the construction material that is the subject matter of the present invention is a material comprising, among others, a thermosetting resin and a filler treated with a surface coating product, and which has the particular feature of comprising a composition in % by weight, comprising:
8 - 45% thermosetting resin;
50 - 90% total filler material, wherein this material can be mineral, porous, organic, or a mixture of the above, wherein this material is treated with 0.01 - 9% surface coating product with respect to the total of the filler material, this coating being fatty acids such as oleic, palmitic, stearic or linoleic acid, the
salts thereof or other derivatives, such as stearin;
   and wherein in a possible embodiment it may comprise a pigment, with a ratio of up to 10% by weight with respect to the total mixture; and/or may comprise a catalyst, with a ratio of up to 5% by weight with respect to the total.

The surface treatment can be carried out on the entire mineral and/or organic part, or only on a portion thereof. As indicated above, this treatment allows said filler material to be isolated or encapsulated and, therefore, this achieves the technical advantage of lightening the density of the construction material and reducing its weight.

The mineral fillers used are carbonates, silicates, aluminosilicates or hydrated aluminas. The porous filler is perlite, verniculite, pumice, sepiolite, zeolite or expanded glass. Organic fillers come from agricultural or forestry activity, such as olive pits, rice husks or almond shells.

Going into detail regarding this composition, it must be taken into account that the average particle size of the porous filler material is comprised between 5 µm and 10 mm; while the average particle size of the mineral and/or expanded filler material is comprised between 5 µm and 1 cm. Organic fillers have an average particle size below 1.50 cm.

The composite material that is the subject matter of the invention comprises a thermosetting resin part, wherein this thermosetting resin is at least one selected from polyester, vinyl ester, epoxy resin, acrylic resin and polyurethane. These resins are catalysed with the usual catalysing methods for each type of resin.

The pigment preferably used for this material is titanium dioxide, which gives a whitish colour; although another type of pigment can be used depending on the possible final use of the final product. These other possible pigments include carbon black, iron oxides, phthalocyanines, chromium oxides, organic pigments such as bendiazolones, quinilones, or combinations thereof, with which shades such as green, blue, red or yellow can be obtained, among other.

Furthermore, the catalyst used in what can be considered a preferred embodiment of the invention is methyl ethyl ketone peroxide, although any other type of catalyst with similar characteristics can be used, such as methyl isopropyl ketone peroxide, acetylacetone peroxide, methyl isobutyl ketone peroxide, cyclohexanone peroxide, dibenzoyl peroxide, peroxides derived from butylbenzanoate, hexanoates, hexane, cumyl peroxides, or mixtures thereof, and catalysing with methods such as UV, microwave, or any type of catalysing of this type of compound.

This composition allows densities below the usual 1800-2,300 kg/m3 known in composite materials for construction use to be obtained that comprise thermosetting resins, reaching densities of up to 2,400 kg/m3 in polymer concretes. In this case, the densities are lower than 1550 kg/m3, and can reach densities lower than 1,000 kg/m3 depending on the final dosage of the filler treated with the coating and the total proportion of porous filler together with the rest of the components of each formulation. In this case, the strength results are adequate for construction use, being in the order of 20 - 40 MPa, therefore, a strong product is obtained that is lighter, which provides a solution to the problems derived from transportation, handling and installation of products with a density as previously indicated.

To obtain a construction product based on this composition, all the components are mixed homogeneously, and then the catalyst is incorporated into said mixture. In this way, a uniform mass is achieved, followed by filling a mould corresponding to the shape and size planned for the piece to be obtained. Depending on the polymer, curing can be carried out using different systems: at room temperature, high temperatures, microwaves. Depending on the final characteristics of the piece, the process may require a vacuum to extract the air created in the mixture and/or vibration. Once cured, the material can be conveniently removed from the mould. Depending on the resin and curing conditions, a post-curing process may be required. This piece can be ready for use, waiting for external components, varnished, painted or others, where appropriate. In this sense, the application of paint can also be carried out initially on the mould, casting it on said paint, previously affixed to the mould. In this case, the paint must be compatible with the thermosetting resin and be able to fuse with the casting material during the latter's reaction.

In any case, it can be said that the method for obtaining a construction material with the previously defined composition comprises the steps of:
i) homogeneously mixing the thermosetting resin, the material treated with the surface coating product and the rest of the fillers and pigments in a stirring system;
ii) introducing the pigment to the mixture of the previous step and mixing in the stirring system;
iii) outlet of the homogeneous mixture resulting from the previous step and filling of a mould;
iv) introducing the catalyst into the mixture ensuring perfect integration with the components of the formula (mixing of all the components and the catalyst can also be carried out at the same time) filled in the mould of the previous step, and mixing homogeneously;
v) filling the moulds with the catalysed mass;
vi) curing the mixture resulting from the previous step for a usual period of 2 to 60 minutes and at a temperature of at least 25 °C;
vii) catalysing process inside the mould. The catalysing times and processes will be characteristic of each type of resin and final product.
viii) obtaining the final product;
and after the step of obtaining the final product, it can be removed from the mould and subjected to a surface finish selected from varnishing, glazing, matting, glossing, painting or any other specific finish that the final product requires.

Taking into account that which was previously described, the subject matter of the present invention is to define the possible use of a material according to the characteristics and composition previously defined for the manufacture of polymer concrete manufactured with thermosetting polymers. Similarly, the use of a material can also be indicated according to the characteristics and composition previously defined for the manufacture of sanitary products such as shower trays, sinks or counter tops. As previously indicated, the material is light, string and, in addition, has good heat and noise insulating characteristics.

It should be noted that, throughout the description and claims, the term "comprises" and its variants are not intended to exclude other technical features or additional elements.

### Detailed description of embodiments of the invention

Next, different exemplary embodiments of a composite material such as that previously described, and which can be used as a construction material, is provided.

A first possible embodiment of the invention consists of a material that has the particular feature of comprising the following composition (in % by weight):
30% thermosetting resin which is an unsaturated polyester resin,
67.4% of mineral filler, of which 33.70% of calcium carbonate has been partially treated with 0.5% of stearic acid with a particle size between 5 and 50 µm, the rest 33.70% mineral filler material, wherein the mineral filler material is calcium carbonate and magnesium with a particle size between 0.01 and 0.5 mm,
2% of a pigment that is titanium dioxide to obtain a white-coloured product; and 0.6% of a catalyst, which is methyl ethyl ketone peroxide.

This material is obtained by means of an initial homogeneous mixing of the treated filler material and the untreated mineral filler material in a stirring system; the subsequent introduction of the pigment to the mixture of the previous step and mixing in the stirring system for about 15 minutes; the outlet of the homogeneous mixture resulting from the previous step and filling of a mould; introducing the catalyst into the mixture filled in the mould from the previous step, and mixing it homogeneously; curing the mixture resulting from the previous step for a period of 50 minutes; obtaining the final product; and after that, it can be removed from the mould and, finally, it is subjected to a surface finish consisting of polishing.

This material has a density of 1550 kg/m3 and a strength in the environment of 31 MPa, which allows it to be used for the manufacture of sanitary products, such as a sink or a shower tray, given that even aesthetically it is a product with a white finish common in this type of product.

A second possible embodiment of the invention consists of a material that has the particular feature of comprising the following composition (in % by weight):
35% thermosetting resin which is an unsaturated polyester resin,
61.2% corresponds to the group of fillers formed by 42.5% calcium carbonate and magnesium treated with 0.7% stearic acid with a particle size between 5 and 50 µm, 10% rice husk with a size less than 1 mm, and 10% perlite-type porous filler material, with a particle size between 0.1 and 0.5 mm;
2% of a pigment that is titanium dioxide to obtain a white-coloured product; and 0.8% of a catalyst, which is methyl ethyl ketone peroxide.

This material is obtained by means of an initial homogeneous mixing of the treated filler material and the mineral filler material in a stirring system; the subsequent introduction of the pigment to the mixture of the previous step and mixing in the stirring system; the outlet of the homogeneous mixture resulting from the previous step and filling of a mould; introducing the catalyst into the mixture filled in the mould from the previous step, and mixing it homogeneously; curing the mixture resulting from the previous step for a period of 55 minutes; obtaining the final product; and after that, it can be removed from the mould and, finally, it is subjected to a surface finish consisting of polishing.

This material has a density of 1200 kg/m3 and a strength of around 25 MPa, which allows it to be used for the manufacture of sanitary products, such as a sink, a shower tray, among others.

At this point, the exemplary embodiment is compared with a conventional product based on polymer resin commonly used for the manufacture of sanitary products, specifically shower trays. This known material is made up of 75% resin and 25% mineral filler material, having a density of 2220 Kg/m³, and has mechanical characteristics similar to those of the previously indicated exemplary embodiment. In the case of polymer concretes, it is known that their densities reach up to 2,400 kg/m³.

It can be seen that the material that is subject matter of the present invention has mechanical characteristics suitable for use in sanitary and construction products, but it has the great advantage of being a less dense material, which enables the problems that exist in known polymer materials regarding its transportation and use to be solved.

It can also be observed that the more the proportion of porous filler is increased and the more the mineral material and the coated filler are reduced, the density decreases, although it is important that the material has at least the minimum proportion of coated mineral, porous or organic filler, to have strength characteristics suitable for the uses described above.

Taking into account all the previous aspects, the present invention solves the problems of being able to have a product that is lighter and easier to handle and more transportable than the polymer materials known to date, wherein this new material allows the necessary strength and aesthetic requirements to be achieved to be able to manufacture sanitary products and/or be used as polymer concrete.

## Claims

1. A composite construction material comprising a thermosetting resin and surface-treated fillers, **characterised in that** it has a composition in % by weight, comprising: 8 - 45% thermosetting resin; 50 - 90% of filler material comprising at least one filler selected from mineral filler, porous filler and organic filler, and wherein this filler material is treated with 0.01 - 9% of surface coating product with respect to the total filler material.

2. The material according to the features of claim 1, wherein the coating is selected from fatty acids, fatty acid salts and stearin.

3. The material according to the features of claim 2, wherein the fatty acids are selected from oleic, palmitic, stearic or linoleic acid.

4. The material according to the features of claim 1, wherein the mineral filler is selected from carbonates, silicates, aluminosilicates or hydrated aluminas.

5. The material according to the features of claim 1, wherein the average size of the mineral filler material is comprised between 5 µm and 1 cm.

6. The material according to the features of claim 1, wherein the porous filler is selected from perlite, verniculite, pumice stone, sepiolite, zeolite or expanded glass.

7. The material according to the features of claim 1, wherein the average size of the porous filler material is comprised between 5 µm and 10 mm.

8. The material according to the features of claim 1, wherein the organic filler is selected from olive pits, rice husks or almond shells.

9. The material according to the features of claim 1, wherein the average size of the organic filler material is below 2 cm.

10. The material according to the features of claim 1, wherein the thermosetting resin is at least one selected from polyester, vinyl ester, epoxy resin and polyurethane

11. The material according to the features of claim 1, comprising a pigment with a ratio of up to 10% by weight with respect to the total material.

12. The material according to the features of claim 11, wherein the pigment is at least one selected from titanium dioxide, carbon black, iron oxides, phthalocyanines, chromium oxides, or organic pigments such as bendiazolones and quinilones, or a mixture of at least two thereof.

13. The material according to the features of claim 1, comprising a catalyst with a ratio of up to 5% by weight with respect to the total material

14. The material according to the features of claim 14, wherein the catalyst is methyl ethyl ketone peroxide, acetylacetone peroxide, methyl isobutyl ketone peroxide, cyclohexanone peroxide, dibenzoyl peroxide, peroxides derived from butylbenzanoate, hexanoates, hexane, cumyl peroxides, or a mixture of at least two thereof.

15. A method for obtaining a composite material according to any of the preceding claims, comprising the steps of:
i) homogeneously mixing a thermosetting resin and a filler material in a stirring system;
ii) introducing a pigment to the mixture of the previous step and mixing in the stirring system;
iii) outlet of the homogeneous mixture resulting from the previous step and filling of a mould;
iv) introducing a catalyst into the mixture filled in the mould from the previous step, and mixing homogeneously;
v) curing the mixture resulting from the previous step for a period of 2 to 60 minutes, and at a temperature of at least 25 °C;
vi) obtaining the final product.

16. The method according to the preceding claim wherein, after the step of obtaining the final product, it is removed from the mould and subjected to a surface finish selected from varnishing, polishing, glazing and/or painting.

17. A use of a material according to any one of claims 1 to 14 as polymer concrete.

18. A use of a material according to any one of claims 1 to 14 for the manufacture of sanitary products.
